Europäisches Patentamt

(19) European Patent Office

Office européen des brevets

(11) Publication number: **0 023 767**
**B1**

(12) **EUROPEAN PATENT SPECIFICATION**

(45) Date of publication of patent specification: 07.03.84

(51) Int. Cl.³: **G 11 B 7/08**, G 11 B 21/10, G 11 B 23/18

(21) Application number: **80302240.9**

(22) Date of filing: **02.07.80**

(54) Video player/recorder for recording on a blank disk and method for home recording.

(30) Priority: **16.07.79 US 58054**

(43) Date of publication of application:
**11.02.81 Bulletin 81/6**

(45) Publication of the grant of the patent:
**07.03.84 Bulletin 84/10**

(84) Designated Contracting States:
**AT BE CH DE FR GB IT LI LU NL SE**

(56) References cited:
**DE - A - 2 522 405**
**DE - A - 2 711 924**
**FR - A - 2 336 766**
**US - A - 3 956 766**
**US - A - 4 087 842**

(73) Proprietor: **DISCOVISION ASSOCIATES**
**P.O. Box 6600 3300 Hyland Avenue**
**Costa Mesa California 92626 (US)**

(72) Inventor: **Green, Robert Charles**
**8, Brentwood Drive**
**Poughkeepsie, New York 12603 (US)**
Inventor: **Kappel, Gertrude**
**93, Fox Run**
**Poughkeepsie, New York. 12603 (US)**
Inventor: **Stigliani Jr., Daniel John**
**27, Kimball Drive**
**Poughkeepsie, New York. 12603 (US)**

(74) Representative: **Arthur, George Fitzgerald et al,**
**KILBURN & STRODE 30, John Street**
**London WC1N 2DD (GB)**

Courier Press, Leamington Spa, England.

Home video player/recorder for recording on a blank disk
and method for home recording

In an optically read video disk, the data tracks are commonly about 1 micron ($10^{-6}$ meters) wide or less and the center to center spacing of tracks is commonly about 2 microns. The disks can be recorded with great precision in a studio and manufactured with a great precision in a "factory" but if a track becomes distorted only slightly from a perfect circle or a perfect spiral, the accumulated distortion may correspond to a few hundreds of track widths, and if excessive distortion occurs, the disk becomes unplayable. A track may become distorted because the material of the record change in dimension with changes in temperature and humidity. Some video disk materials expand and contract preferentially along one axis so that a track that is initially formed as a circle may become an oval instead of simply becoming a larger or smaller circle. In addition, there are relatively large tolerances in centering a disk on a low cost player/recorder and even a perfectly circular track would ordinarily rotate somewhat eccentrically. To limit some of these causes of distortion, a factory master is rotated on a precision drive and the disks are replicated in a carefully controlled environment.

Consider a replicate disk that has been manufactured at the factory with the maximum (but still small) error in a step such as punching the center mounting hole. Suppose further that the disk has undergone additional distortion from environmental factors such as temperature and humidity and then has been placed on the player drive mechanism in the worst possible eecentric position. Within limits, the disk would be played normally without any indication to the user that any of these problems had occurred. The player includes a track following servo system that permits the read operation to be adjusted radially over the range of this maximum permissible error. Conversely, the record and the player are manufactured to tolerances that permit the player to use a relatively simple tracking system and the tracking system itself can correct for errors only over a particular range. (Alternatively, the tolerances can be expressed in terms of the percentage of times that a disk will not play without being recentered, but the preceding explanation is general.)

When a video disk is recorded on a home video disk recorder, the tolerance introduced by the recorder present an additional source of track distortion that does not occur in a factory recorded disk. The home recorder would ordinarily be combined with a video disk player and thus use the same disk drive mechanism, or the recorder would use a duplicate of the player drive mechanism. This drive does not have the precision centering capability of studio recording apparatus or factory replicating and manufacturing apparatus. In addition, the environmental factors that cause changes in the disk shape are usually uncontrolled in home recording. Thus, a disk that has been written on a home recorder from a recording blank will ordinarily have its tracks significantly more distorted than a factory pre-recorded disk. A disk may be recorded in an office or other location where the temperature and humidity are better controlled or where the player/recorder has a more precise drive mechanism, but there may be serious problems for any non-factory environment.

To summarise a later description of the sources of track distortion, the distortion can be a constant offset across a radius of the disc, as in the miscentering example discussed already, or the distortion can vary across a radius. One object of the invention is to provide a new and improved system of a video player/recorder using an appropriate blank recording disk to achieve compensation for these sources of distortion.

In German Patent Specification No. 2711924 there is disclosed apparatus for recording an information track on a disk which carries a reference track which apparatus includes a read and/or write head capable of reading the reference track and storing error signal values whereby in a subsequent write or record operation, stored error signals can be used to control the position in which the information track is recorded on the disk.

According to one aspect of the present invention such a disk has at least two spaced apart reference tracks, and a processor stores error signal values for each of the two tracks during respective initial reading operations, and derived error signals from the store in accordance with the shape of the two reference tracks in proportion to the spacing of the head between the tracks are used during a recording operation for recording an information track.

The use during writing of stored tracking error signals from at least two reference tracks in dependence on the position of the write head between the two reference tracks, enables the information track to be recorded with great uniformity of track spacing.

According to a second aspect of the invention, in a method of making a recording on a blank disk carrying two spaced reference tracks, in an initial read operation error signal values are derived from the reference tracks and stored together with angular position signals obtained during the initial read operation, and in a subsequent recording operation the position of a writing head in relation to the disc is controlled using stored signals in synchronism with angular position signals obtained during the recording operation, the derived signals used during the recording operation according with the shape of the reference tracks in proportion to the spacing of the head between the tracks.

The invention may be carried into practice in various ways, and one embodiment and certain modifications of it will now be described by way of example with reference to the accompanying drawings in which:—

FIGURE 1, parts A and B, is a block diagram of the video player/recorder of this invention,

FIGURE 2, parts A—E is a diagram of a video disk illustrating track distortion caused by anisotropic disk medium distortion;

FIGURE 3, parts A—B, is a diagram of a video disk illustrating track distortion caused by miscentering of the disk on the player/recorder.

FIGURE 4, parts A—C, is a diagram of a video disk illustrating track distortion from the combined effects of anisotropic medium distortion and miscentering.

The Embodiment of the Drawing

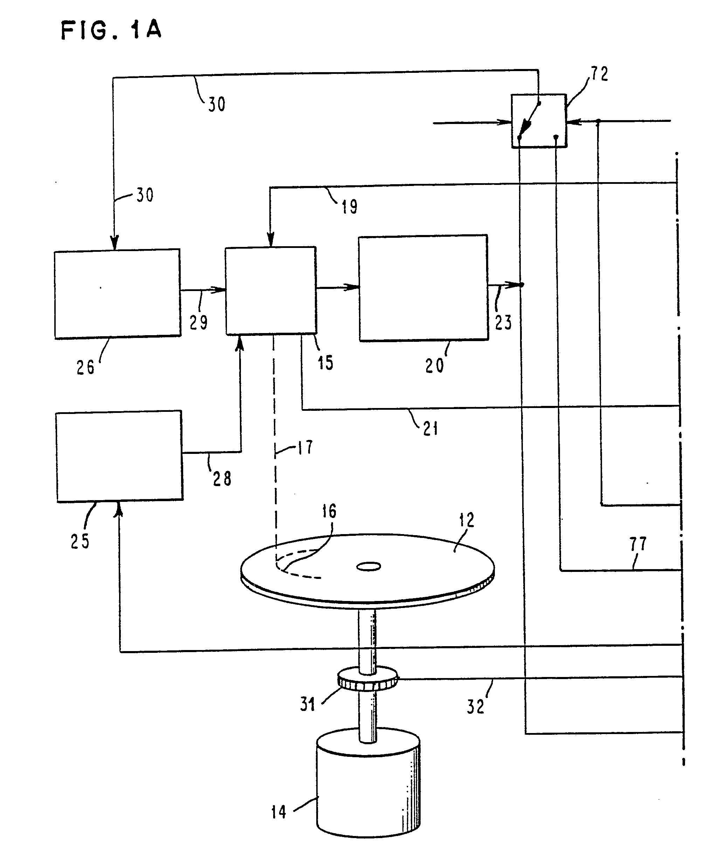

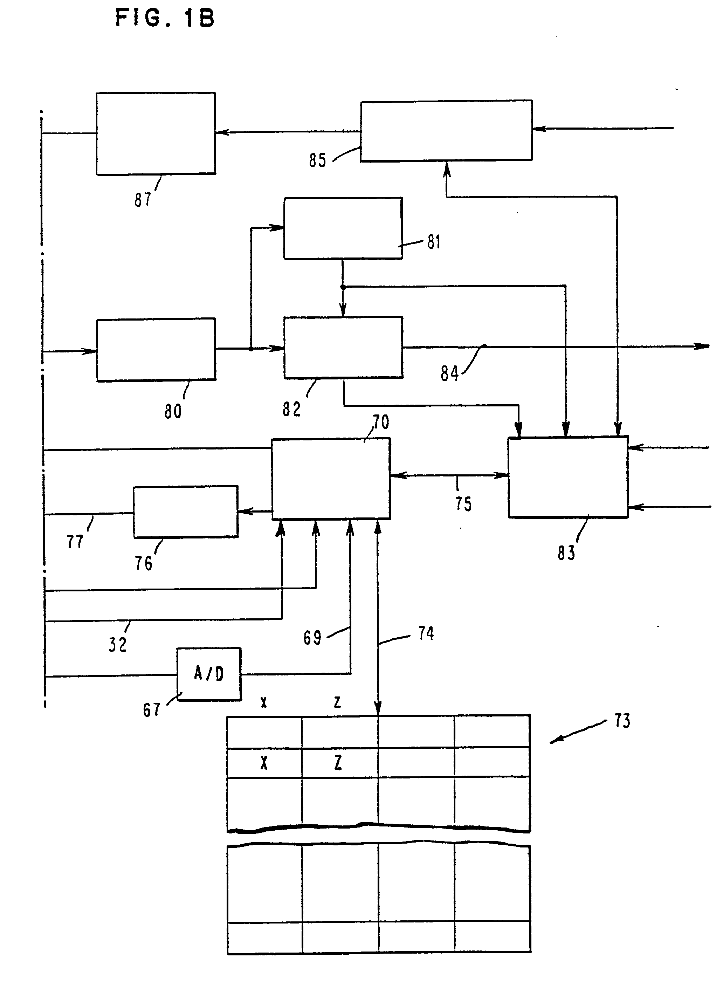

*Fig. 1 — Conventional Features* — Fig. 1 shows a video disk 12 that is conventional except for features that will be described later. Disk 12 is driven by a motor 14 at an appropriate speed, typically at the rate for reading one frame per revolution. A read/write head 15 is positioned over a track 16 to illuminate the track as represented by dashed line 17 for read or write operations. For a write operation, the read/write head receives data to be recorded on a data input line 19 and during a read operation, the read/write head produces signals for data that has been read from the disk on a data output line 21. Head 15 also supplies a signal to a radial runout processing circuit 20 (well known) that produces a radial tracking error signal on a line 23. The data on line 21 typically represents a video signal and accompanying audio signal for a telecision presentation and can be in any form on the disk such as optical marks that vary in length to represent a frequency modulated signal or an incremental pulse length modulated digital code. Typically, data line 21 also carries control signals and any other useful information such as track addresses, and the addresses on line 21 are used in the apparatus of the invention as will be described later.

A read/write head coarse positioner 25 and a fine positioner 26 are connected to the read/write head as is represented by lines 28 and 29 to position the light beam 17 of the read/write head on the selected track. Positioner 25 conventionally comprises a lead screw and a drive motor that advance the read/write head at a uniform speed across the radius of the disk for normal sequential read or write or shifts the read/write head rapidly from one track to a remote track for reading a particular unit of programming material on the disk. The fine positioner 26 may comprise a voice coil or the like that is mechanically mounted on the coarse read/write head positioner 25 and is connected to the read/write head 15 for moving the entire read/write head over a distance that typically is a few hundred tracks in width. Equivalently as shown in Fig. 1, fine positioner 26 may control a mirror in read/write head 15 for moving the light beam 17 without correspondingly moving the read/write head.

The fine positioner 26 receives the radial tracking error signal from line 23 as is represented by a line 30. The tracking signal on line 23 is conventionally formed as the difference signal produced by two photo diodes that are arranged to be equally illuminated when the beam 17 is on a track (not necessarily the selected track). This, the difference signal is zero when the read/write head is following the center of a track and it becomes positive as the operation drifts to one side of the track and negative as it drifts to the other side of the track. Other tracking systems, such as dithering, are known.

The drive system for the disk 12 includes means 31 for producing a series of shaft position pulses on a line 32 to identify the angular position of the disk as it rotates. One of these positions is recognizable as a starting position, for example, by a pulse of space of longer duration than the others. Appropriate sync codes (pre-recorded at the factory) on a reference track can also be used to identify the angular position of the disk. The conventional sync code and address reading apparatus of the reader/recorder can read these codes and addresses and supply an angular position. Radial sync lines in the vertical retrace interval provide synchronism to the reference. Ordinarily, the disk 12 will be mounted at some arbitrary position but a fixed relationship between pulses on line 32 and position of the disk exists while the disk is mounted for a write operation. As is conventional, the time intervals defined by the pulses shown on line 32 in Fig. 1 can be subdivided to provide timing for operations that occur at differing times within the period of the pulses.

The components that have been described so far are conventional in a variety of components and component relationships in previously proposed video/recorders and Fig. 1 as described so far is only representative of a variety of apparatus that the invention can be used with. It will be helpful to discuss the video disk before completing the description of the player/recorder of Fig. 1.

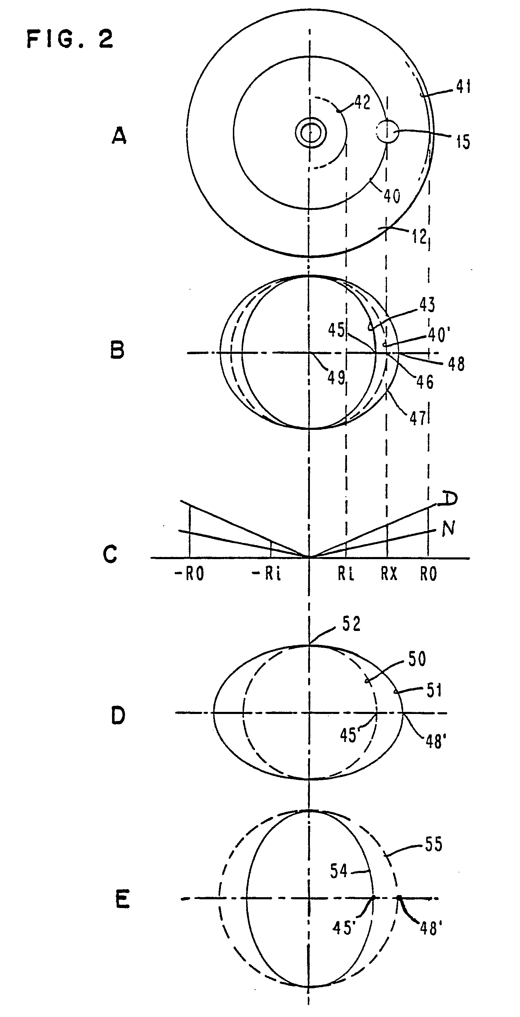

*Fig. 2 — The Disk* — Fig. 2, part A shows the video disk 12 used in this invention. A read/write head 15 is centered on a track 40. Track 40 may be a spiral or a closed circle but a circle is shown to provide a reference to show track distortion in the other parts of Fig. 2.

The disk has two reference tracks that are formed at a factory with a precision of centering and/or a control of environment that will probably not provided during recording on the player/recorder of Fig. 1. An outer track 41 is preferably located at the outer edge of the recording area and an inner track 42 is preferably located at the inner edge of the recording area. The tracks may be shaped as the beginning of a spiral but preferably the two reference tracks are closed circles.

The reference tracks will ordinarily but not necessarily be recorded in the factory by the same technique that is used to record similar factory replicated disks. For example, a blank recording disk for home or factory recording may have a layer of a chalcogenide material that is written in the factory by exposure to light through a mask or is written in the home recorder by means of a laser beam 17. The reference tracks can be similarly formed in the factory by exposure through a mask. As another example, the disk may be written in the home by using laser beam 17 to burn holes in a heat sensitive layer on the disk and a similar heat process can be used to form the reference tracks in the factory. If the disk requires a development step that prevents further writing, the reference tracks can be formed by a separate process that does not require the development step. Suitable materials and writing techniques for factory or home recording have been proposed and will be readily apparent.

It will be helpful to consider the different sources of track distortion and how track distortion occurs at different radial track positions for a factory recorded dsk and for a non-factory recorded disk.

Circular distortion. If the record medium expands (or contracts) evenly in all directions (isotropically), a perfect track circle simply becomes larger (or smaller) and there is no effect that is detectable to the player.

Elliptical distortion. If the record medium expands (or contracts) preferentially in one direction (anisotropically), a perfect circle is distorted into an ellipse and during a read operation the read head moves between the radius of the minor axis and the radius of the major axis of the ellipse. Fig. 2, part B, shows a reference a dashed line circle 40' at the radius Rx of track 40 in Fig. 2, part A. Circle 40' represents a track recorded under well defined conditions at a factory or a track recorded under fixed conditions at a factory or a track recorded under fixed conditions of centering and disk medium shape in the home player/recorder. The record may shrink along the X axis and remain stable along the Y axis so that the track become elliptical as represented by a line 43. (The distortion is of course greatly exaggerated in the drawing.) During a read operation, the read head would move between a radially inward point 45 which is the radius of the minor axis of the ellipse and a radially outward point 46 which is on the reference circle and equals the radius of the major axis of the ellipse.

Similarly, the record medium might expand along the X axis to distort the circular track into an ellipse 47. In the operation of reading elliptical track 47 the read head would move between the radially inward point 46 on the reference circle (the radius of the minor axis of the ellipse) and a radially outward point 48 (the radius of the major axis of the ellipse). Notice that Fig. 2, part B, is drawn with the minimum ellipse 43 and the maximum ellipse 47 equally spaced from the reference circle 40'. For a total medium change represented by the distance between points 45 and 48, this arrangement produces the minimum track distortion and this will ordinarily be the preferred arrangement for a factory recorded disk. Thus, the reference track 40' can shrink the distance 45—46 or it can expand the distance 46—48 but it can not change by a greater amount.

Fig. 2, part C, shows the track distortion graphically as a function of radial position. A radius Rx represents the generalized track 40 in Fig. 2, part A. Since the error is cumulative along the radius, it has a maximum value at the outer radius of the disk, Ro, and a decreasing value for radially inward tracks. Since the center of the disk and the center of rotation coincide in this example at point 49, the disk has zero distortion at its center. The error is of course symmetrical along opposite radii.

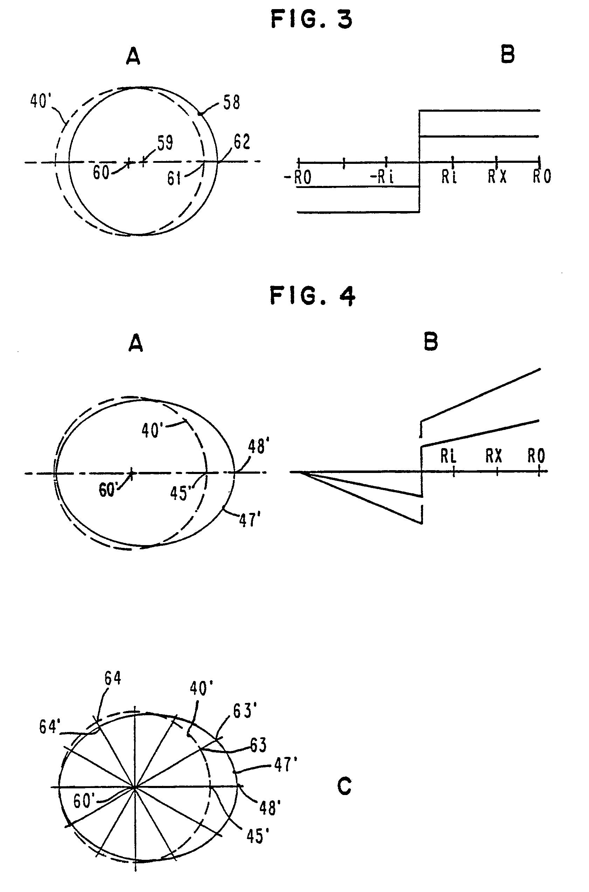

The elliptical error that has been discussed so far is represented in Fig. 2, part C, by a line labeled N. When the disk is recorded in a non-factory environment, it will usually be impossible to assure that the blank recording disk is in its optimum condition as represented by the dashed line circle 40' in Fig. 4, part B. Thus, it is possible for the disk to be recorded in a maximum shrinkage condition and later replayed at a maximum expansion. If this occurs, the error is doubled, as can be seen from Fig. 2, parts D and E.

Fig. 2, part D, shows a dashed line reference track 50 recorded when the medium has shrunk the maximum amount along the X axis. This circle has the radius of point 45 in Fig. 2, part B, and point 45' in Fig. 2, part D, is at the same relative position as point 45 in Fig. 2, part B. When the recorded medium expands from the minimum value to the maximum value, circle 50 is distorted into an ellipse 51. Point 48' on ellipse 51 is at the same relative position as point 48 in Fig. 2, part B. Thus, point 45' on the originally recorded circle 50 moves radially outward to point 48' on ellipse 51. Notice that point 52 at the minimum radius of ellipse 51 is on circle 50 and thus has the radius of point 45'.

During a read operation on elliptical track 51, the read head 15 must be moved radially between points 45' and 48'. This distance is twice the distortion of Fig. 2, part B (45—46 or 46—48). Notice that in both parts B, and D, of Fig. 2, a physical point on the disk is moved by disk expansion from a location 45 or 45' to a location 48 or 48'. In the factory recording of Fig. 2, part B, this storage medium distortion produces a normal error because the factory recorded track was originally located at the perfect circle 40' midway between these extreme values (or a circular or spiral track recorded at point 46 would expand only to point 48). However, where the maximum expansion and contraction can occur between recording of playback because the environment is not well controlled, a double error can occur as is represented in Fig. 2, part C (label D).

Fig. 2, part E, similarly represents the effect of recording a circle 55 when the storage medium has expanded by the maximum amount along the X axis and then reading an ellipse 54 after the medium has shrunk the maximum amount. Points 45' and 48' have the same relative positions in both parts D and E of Fig. 2 and illustrate the same amount of track distortion. A factory replicated disk would have the corresponding track midway between points 45' and 48' and thus would have only half the distortion in the worst case.

*Fig. 3 — The Disk —* Mis-centering. During factory recording, the recording master is rotated on a drive mechanism that has a negligible bearing runout. However, the centering hole of the disk is formed to provide a predetermined clearance between the spindle of the player and the centering hole of the disk. Thus, a replicate disk is generally located on a player with its center displaced from the center of rotation of the spindle by an amount that is significant as a source of track eccentricity. The tolerance of the bearing supporting the spindle of the home recorder further increases the track distortion from mis-centering. The effect of these tolerances is illustrated in Fig. 3, parts A and B. Part A of Fig. 3 corresponds to Fig. 2, part B, and shows a dashed reference circle 40' which corresponds to track 40 in Fig. 2A. A solid line circle 58 shows the same track circle displaced to the right along the X axis by a maximum amount so that the center 59 of the disk is to the right of the center of rotation 60.

Part B of Fig. 3 is a graph of the error as a function of radius along the X axis where the maximum distortion from the mis-centering occurs. Each point along this diameter is off-set from the center of rotation 59 by the same amount, and the graph of part B shows that a fixed maximum error in a positive direction (arbitrarily) occurs to the right of the center of rotation 60 and that the same error of negative direction occurs along this radius to the left of the center of rotation.

The disk can be placed on the player spindle with any amount of off-set between the disk center 59 and the center of rotation 60 up to a limit of the total tolerance (and with any radius of the disk as the line along with the maximum off-set occurs). Thus, the distance 61—62 in Fig. 3A represents a radius of error between the center 59 of the disk which is defined by the factory recording operation and the center of rotation 60 which is defined by the position of the disk on the player. The error is limited to this radius, and not to the diameter, because the center 59 is accurately defined in the factory operations. The player is constructed to operate with disks that are manufactured within this tolerance.

By contrast, a non-factory recording may be initially formed with the disk center at one maximum off-set position and the disk may later be played with the maximum off-set in the diametrically opposite direction. Thus, the mis-centering error of a non-factory recorded disk gives twice the distortion of a factory recorded disk, as Fig. 3, part B shows.

Other distortion sources. In examples of Fig. 2, part C and Fig. 3, part B, the distortion is a linear function of radius. In a practical system, there are other error sources that produce local variations in the error and the linear error functions are approximation of the error profile along the radius of an actual disk. If desirable, a more complex error profile can be approximated piecewise by linear functions by using additional reference tracks 41, 42 as will be described later.

*Fig. 4 — Composite track distortion —* Fig. 4 shows a dashed line reference circle 40' corresponding to track 40 in Fig. 4A and an ellipse 47' that is identical in shape to the elliptical track 47 of Fig. 2B and has the same off-set to the right along the horizontal axis as track 58 in Fig. 3A. The elliptical and mis-centering errors are shown as substantially identical with a slight difference in Fig. 4A so that circle 40' and ellipse 47' can be distinguished. It can be seen in Fig. 4, part A, that the magnitude of the error is a maximum at point $R_0$ and decreases along the diameter of the record to a minimum value at point $-R_0$, with a change from a positive error to a negative error at the center of actual rotation 60'. This error corresponds to the distance between point 45' on the originally recorded circle 40' and point 47' on the elliptically distorted and off-centered track 47'. Notice that points 45' and 48' are the same points on the disk in each of the Figs.

As in the earlier examples, the distance 45'—48' is a double distortion limit that combines distortions from home recording and playing. In a factory record, the track represented by lines 40', 48' would be recorded as a circle falling midway between points 45', 48' so that the maximum excursion of the track is the normal distortion limit shown in Fig. 4B.

Fig. 4, part C, is identical to Fig. 4, part A, except that representative radii are drawn to show how the distortion or track error is measured as a function of the radial position signal on line 32 in Fig. 1. The error 45', 48' is shown as in part A and other errors such as 63—63', 64—64' are also indicated.

The Data Storage and Processing Apparatus of Fig. 1

When a blacnk recording disk is mounted on the player/recorder for a home recording operation, the player/recorder is operated to read each factory recorded reference track 41, 42 in sequence and to form a series of error signals at positions defined by the pulse on disk position line 32. For this operation, the read/write head positioner 25 is first operated to move the read/write head 15 to a position to read a selected track. The fine position controller 26 controls the read/write head to actually follow the selected factory recorded track. Video players conventionally have means for accessing a track from a command specifying the track to be accessed by the track address or equivalent information and commands for the read operations are produced by a general purpose data processor 70. During each read operation, the radial runout processing electronics 20 receives the signal from the read/write head and produces tracking error signals on line 23 signifying the distance that the beam 17 must be moved from a normal position in order to follow a reference track. This analog signal is applied to the fine position controller 26, as is conventional, through a switch 72 and it is also supplied to an analog-to-digital converter 67. The output of analog to digital converter 67 on line 69 is a multi bit code that corresponds to the error signal such as 63—63' in Fig. 4C at the particular location defined by the position pulses on line 32 and this digital code is supplied to processor 70.

Processor 70 is associated with a data store 73 that stores the error signals on line 69 for each of the radial positions defined by the pulses on line 32. The data store is conventional and may have a data input register, a data output register and an address register connected to the processor by a bus 74. Store 73 is shown as an array of rows and columns that will help to illustrate the organization of data in the store.

Processor 70 receives the disk position pulses on line 32 and it receives the track address on a line 75 (as described later) and it produces a sequence of addresses for data store 73. For example, the processor may have components that form a counter that generates a sequence of binary numbers in response to pulses on line 32. The counter can be reset in response to the reference pulse or otherwise synchronized with the reference pulse. Additional address bits that are required for accessing the memory along the columns are provided by a digital code that is carried on the track and supplied on line 75. Thus, the track address forms address bits that correspond to columns in the array and the counter forms address bits that correspond to rows of the array. This representation of a storage array and the two addressing components is commonly used to represent a wide variety of physical addressing and storage arrangements.

The general case has been described in which there is no restriction on the number of reference tracks or their spacing except that a first reference track (e.g., the outer track 41) is in a predetermined location. The first reference track can carry specific information to be used by processor 70. If the reference track locations are standardized, implicit addresses can be formed by the processor from address information supplied by positioner 25.

During the write operation that will be described later, the processor operates on the data in store 73 to form a control signal for fine positioner 26. This digital signal is applied to a digital to analog circuit and filter 76 which produces an analog signal on a line 77. Switch 72 is operated according to signals Reads and Write which may be supplied by the user and/or by the processor.

Components 80—84 illustrate suitable means for reading the track addresses. The signal on line 21 from the read/write head 15 is applied to a signal processing circuit 80 that converts the incremental pulse width coded signals on lines 21 to multi-bit digital code blocks and provides related functions. Circuit 81 detects sync codes in the output of the sequential processing circuit, and circuit 82 supplies digital control information to a processor 83 and supplies the audio and video information to an output 84. Processor 83 supplies the address on line 75 as already explained. Processor 83 receives controlling inputs from a user or from other external sources as is well known. Processors 70, 83 may be separate processors as represented in the drawing or they may be considered to represent different functions of a single processor. Equivalent apparatus for reading track addresses is well known in various forms adapted to a particular disk format.

A sync and control insertion circuit 85 and a digital to pulse length modulation convertor 87 are shown to complete the drawing. Digital codes representing a video signal to be recorded or related address and control information is supplied to the sync and control insertion circuit which organizes the input data into multi-bit blocks and inserts standard control information such as track addresses supplied from processor 83. The convertor 87 produces a length modulated rectangular wave form that turns on and off beam 17 to produce a modulated sequence of marks and spaces on disk 12 during a write operation. These general functions can be provided by various other components.

The Write Operations

When the array of store 73 has been loaded with track error information in the way already described, the processor 70 reads the array according to the addresses associated with angular positions defined by line 32 (for example by incrementing a counter). The processor uses the information in the array to position the read/write head for a write operation. The information across the two rows of the array corresponds to the right and left half of the graph of Fig. 4, part B, and each other row corresponds to a similar graph for a different radius of the disk. The system of Fig. 1 calculates intermediate values according to the values in two adjacent columns of the array and the actual address of the write operation in relation to the addresses of the two reference tracks. Suitable processor operations will be readily apparent.

For example, suppose that the write operation is at a track having an address y between reference tracks having addresses x and z and that the operation is at an angular position on track y where the error for track x is X and the error for track z is Z. (Compare addresses $R_1$, $R_x$ and $R_0$ and the associated track errors in Fig. 4, part B.) The addresses are shown as column headings in array 73 and the errors are shown as entries in a particular row of the array. By interpolation, the error Y at this angular position on track Y is calculated by processor 70 as follows.

$$Y = X + \frac{(Z - X)(y - x)}{(z - x)}$$

The result Y is supplied to control 26. Many equivalent operations will be apparent. For example, the calculations do not need to be made for each track but can be performed for a set of adjacent tracks and then re-read from processor storage.

A number of techniques are available for forming the reference tracks independently of the data recording material of the disk but with the precision of a factory recording. For example, metal tracks can be formed by vapor deposition or the reference tracks can be mechanically scribed or stamped on the disk.

The advantages of the invention will usually be used to permit closer track spacing in a home recorded disk. The invention permits the data density to be increased to an extent that otherwise might cause loss of picture quality or absolute loss of the digital tracking errors. In a player/recorder, the invention may optionally permit wider tolerances in the mechanism or reduced requirements for the tracking system.

## Claims

1. A home video player/recorder for recording on a disc (12) having at least one reference track, the player/recorder being arranged to rotate a disc (12) in relation to a read and/or write head (15), and to produce a track error signal, and having tracking means (26) responsive to the track error signal for positioning the head to follow a track, and being arranged to produce a signal (32) defining the angular position of a disc mounted on the player/recorder, a processor (70) connected to receive the error signal (69) and the angular position signal during an initial read operation on a reference track on a newly-mounted disc, and to store error signal values at predetermined address locations in a data store (73), the processor being connected to supply to the positioning means (26) during a recording operation error signals (77) derived from the store in synchronism with the angular position signal, characterized in that: said disc has at least two spaced-apart reference tracks (x, y); said processor stores error signal values (X, Z) for each of the two tracks during respective initial reading operations, and said derived error signals from said processor are in accord with the shape of the two reference tracks in proportion to the spacing of the head between the tracks.

2. A player/recorder as claimed in Claim 1, wherein the processor includes means for positioning the head according to a track address (75) and the player/recorder includes means (80—84) for reading track addresses and other control information from a disc track and the processor (70) includes means for selecting a next reference track from information contained in a preceding reference track.

3. A player/recorder as claimed in Claim 1 or Claim 2, including means (83) defining a track address of a track being recorded and wherein said processor (70) derives the error signal (Y) from the store (73) according to the address (x, z) of two adjacent reference tracks and the corresponding stored error signal values (X, Z) and at least a portion of the address (y) of the track being written.

4. A method of making a home videodisc recording in which a blank disc (12) carrying one or more reference tracks (41, 42) is positioned on the turntable (12) of a recorder, and — in an initial read operation — error signal values are derived from the reference track or tracks and stored in a store (73) together with angular position signals obtained during the initial read operation; and in which during a subsequent recording operation the position of a writing head (15) in relation to the disc is controlled using signals derived from the store in synchronism with angular position signals obtained during the recording operation, characterized in that the disc has two spaced reference tracks and the derived signals used during the recording operation are in accord with the shape of the reference tracks (Ri, Ro) in proportion to the spacing (Rx) of the head between the tracks.

## Revendications

1. Enregistreur-reproducteur domestique pour l'enregistrement sur un disque (12) ayant au moins une piste de référence, l'enregistreur-reproducteur étant agencé pour faire tourner un disque (12) par rapport à une tête de lecture et/ou d'écriture (15) et pour produire un signal d'erreur de guidage, et ayant un moyen de guidage (26) répondant au signal d'erreur de guidage pour placer la tête pour suivre une piste, et étant agencé pour produire un signal (32) définissant la position angulaire d'un disque monté sur l'enregistreur-reproducteur, un processeur (70) connecté pour recevoir le signal d'erreur (69) et le signal de position angulaire pendant une opération initiale de lecture sur une piste de référence sur un disque nouvellement monté, et pour stocker les valeurs du signal d'erreur en des emplacements prédéterminés d'adresse dans une mémoire de données (73), le processeur étant connecté pour fournir, au moyen de positionnement (26), pendant une opération d'enregistrement, des signaux d'erreur (77) dérivés de la mémoire en synchronisme avec le signal de position angulaire, caractérisé en ce que: ledit disque a au moins deux pistes de référence espacées (X, Y), ledit processeur stocke les valeurs du signal d'erreur (X, Z) pour chacune des deux pistes pendant des opérations initiales respectives de lecture, et lesdits signaux dérivés d'erreur dudit processeur sont en accord avec la forme des deux pistes de référence proportionnellement à l'espace de la tête entre les pistes.

2. Enregistreur-reproducteur selon la revendication 1, où le processeur comprend un moyen pour placer la tête selon une adresse (75) de piste et l'enregistreur-reproducteur comprend un moyen (80—84) pour lire des adresses de piste et autre information de contrôle sur une piste du disque et le processeur (70) comprend un moyen pour choisir une piste de référence suivante à partir de l'information contenue dans une piste de référence précédente.

3. Enregistreur-reproducteur selon la revendication 1 ou la revendication 2, comprenant un moyen (83) définissant une adresse de piste sur une piste qui est enregistrée et où ledit processeur (70) dérive le signal d'erreur (Y) de la mémoire (73) selon l'adresse (X, Y) de deux pistes adjacentes de référence et les valeurs correspondantes du signal stocké d'erreur (X, Z) et au moins une partie de l'adresse (y) de la piste qui est écrite.

4. Procédé de production d'un enregistrement sur vidéodisque domestique où un disque-ebauche (12) portant une ou plusieurs pistes de référence (41, 42) est placé sur la platine (12) d'un enrigistreur et dans une opération initiale de lecture, des valeurs de signal d'erreur sont dérivées de la piste de référence ou des pistes et stockées dans une mémoire (73) avec des signaux de position angulaire obtenus pendant l'opération initiale de lecture; et où pendant une opération subséquente d'enregistrement, la position d'une tête d'écriture (15) par rapport au disque est contrôlée en utilisant les signaux dérivés de la mémoire en synchronisme avec des signaux de position angulaire obtenus pendant l'opération d'enregistrement, caractérisé en ce que le disque a deux pistes espacées de référence et les signaux dérivés utilisés pendant l'opération d'enregistrement sont en accord avec la forme des pistes de référence (Ri, Ro) proportionnellement à l'espace (Rx) de la tête entre les pistes.

**Patentansprüche**

1. Heim-Video-Aufzeichnungs/Wiedergabegerät zur Aufzeichnung auf einer Platte (12) mit wenigstens einer Referenzspur, wobei das Aufzeichnungs/Wiedergabegerät zur Drehung einer Platte (12) relativ zu einem Schreib- und/oder Lesekopf (15) und zur Erzeugung eines Spurfehlersignals eingerichtet ist und auf das Spurfehlersignal ansprechende Spurfolgemittel (26) zur Positionierung des Kopfes hat, um einer Spur zu folgen, sowie zur Erzeugung eines Signals (32) eingerichtet ist, das die Winkellage einer am Aufzeichnungs/Wiedergabegerät angebrachten Platte definiert, wobei ein Prozessor (70) angeschlossen ist, um das Fehlersignal (69) und das Winkellagensignal während eines anfänglichen Lesevorganges an einer Referenzspur auf einer neu angebrachten Platte zu empfangen und Fehlersignalwerte an vorherbestimmten Adreßstellen in einem Datenspeicher (73) zu speichern, welcher Prozessor angeschlossen ist, um den Positioniermitteln (26) während eines Aufzeichnungsvorganges Fehlersignale (77) zuzuführen, die vom Speicher synchron mit dem Winkellagensignal hergeleitet werden, dadurch gekennzeichnet, daß die Platte zumindest zwei in Abstand voneinander vorgesehene Referenzspuren (x, y) hat; der Prozessor Fehlersignalwerte (X, Z) für jede der zwei Spuren während der entsprechenden anfänglichen Lesevorgänge speichert, und die hergeleiteten Fehlersignale vom Prozessor in Übereinstimmung mit der Form der zwei Referenzspuren im Verhältnis zum Abstand des Kopfes zwischen den Spuren sind.

2. Aufzeichnungs/Wiedergabegerät nach Anspruch 1, bei dem der Prozessor Mittel zur Positionierung des Kopfes gemäß einer Spuradresse (75) enthält und das Aufzeichnungs/Wiedergabegerät Mittel (80—84) zum Lesen von Spuradressen und anderer Steuerinformation aus einer Plattenspur enthält, un der Prozessor (70) Mittel zur Auswahl einer nächsten Referenzspur aus in einer vorhergehenden Referenzspur enthaltener Information enthält.

3. Aufzeichnungs/Wiedergabegerät nach Anspruch 1 oder 2, mit mitteln (83), die eine Spuradresse einer gerade aufgezeichneten Spur definieren, und bei dem der Prozessor (70) das Fehlersignal (Y) vom Speicher (73) gemäß der Adresse (x, z) von zwei benachbarten Referenzspuren und den entsprechenden gespeicherten Fehlersignalwerten (X, Z) und zumindest einem Teil der Adresse (y) der gerade eingeschriebenen Spur herleitet.

4. Verfahren zur Herstellung einer Videoplatten-Heimaufzeichnung, bei dem eine Plattenrohling (12), der eine oder mehrere Referenzspuren (41, 42) trägt, auf einem Plattenteller (12) eines Aufzeichnungsgerätes in Position gebracht wird und — in einem anfänglichen Lesevorgang — Fehlersignalwerte von der Referenzspur oder den -spuren hergeleitet und in einem Speicher (73) zusammen mit während des anfänglichen Lesevorganges erhaltenen Winkellagensignalen gespeichert werden; und bei dem Während eines nach folgenden Aufzeichnungsvorganges die Position eines Schreibkopfes (15) relativ zur Platte unter Verwendung von Signalen, die vom Speicher synchron mit während des Aufzeichnungsvorganges erhaltenen WInkellagentsignalen hergeleitet werden, gesteuert wird, dadurch gekennzeichnet, daß die Platte zwei mit Abstand vorgesehen Referenzspuren hat und die während des Aufzeichnungsvorganges verwendeten, hergeleiteten Signale in Übereinstimmung mit der Form der Referenzspuren (Ri, Ro) im Verhältnis zum Abstand (Rx) des Kopfes zwischen den Spuren sind.

# FIG. 1A

FIG. 1B

FIG. 2

# FIG. 3

A

B

# FIG. 4

A

B

C